# EUROPEAN PATENT APPLICATION

(11) **EP 3 772 034 A1**
(43) Date of publication of application: **03.02.2021**
(21) Application number: 20187282.7
(22) Date of filing: 22.07.2020
(51) Int. Cl.: G06Q 30/08, G06Q 50/30

(54) **SYSTEMS AND METHODS FOR AUTOMATICALLY ALLOCATING AIRSIDE SLOTS USING SHARED LEDGER DATABASES**

(30) Priority: 30.07.2019 US 201916526494
(71) Applicant: Honeywell International Inc., Morris Plains, NJ 07950 (US)
(72) Inventor: HEGDE, Satish Narayan, Morris Plains, NJ New Jersey 07950 (US); SUKUMAR, Sreenath, Morris Plains, NJ New Jersey 07950 (US); SAHITHYA, Seemakurthi, Morris Plains, NJ New Jersey 07950 (US); KAR, Satyanarayan, Morris Plains, NJ New Jersey 07950 (US); BUTTERS, Lisa, Morris Plains, NJ New Jersey 07950 (US); RAO, Sujay, Morris Plains, NJ New Jersey 07950 (US)
(74) Representative: Haseltine Lake Kempner LLP

(57) **Abstract**

Techniques are provided for managing airport slot reservations using a shared database network. A computing device receives information of one or more open airport slots. The availability of the open airport slots is validated through the shared database network and is stored in a shared ledger of the shared database network. The open airport slots are published to one or more carriers to initiate electronic transactions of the open airport slots. The computing device receives one or more bid transactions from the air carriers for the open airport slots. Each bid transaction has associated bid information. The bid transactions are validated using predefined validation rules, and they are allotted to corresponding open airport slots based on the predefined validation rules and the bid information. The bid transactions allocated to the corresponding open airport slots are published to the shared ledger.

## Description

### TECHNICAL FIELD

Various embodiments of the present disclosure generally relate to the use of shared ledger databases and other blockchain technology to record information and, more particularly, to systems and methods that use shared ledger databases and other blockchain technology to record information pertaining to airside or airport slot usage and allocation.

### BACKGROUND

The aviation industry increasingly faces capacity challenges in certain jurisdictions that have become hot spots for air travel due to its mature transport industry. Most capacity challenges emerge at airports (e.g., capacity challenges at terminals, gates or runways) or at flight paths (e.g., congested or unpredictable flight paths). Airports owners often assign rights to airlines to use airport facilities. For example, airport owners grant slot rights to airlines to allow the airline to schedule a landing or departure during a specific time period. In one example, airport owners may grant to airlines or other slot holders a landing slot, takeoff slot, airport slot, or airspace slot. These slots may have significant commercial value, and some jurisdictions allow for slots to be traded between airlines. For example, an airline may pay a premium to purchase a landing slot from another airline during peak arrival or departure times.

Additionally, airlines are under pressure to utilize their granted or otherwise obtained slots efficiently. At some airports, if an airline does not use an allocation of its slots at a certain percentage over a period of time (e.g., a utilization rate), it can lose the rights to the slots partially or entirely. Thus, airports and airlines need a mechanism to verify slot availability and usage. Existing slot management systems depend on centralized intermediaries to enable primary and secondary trades. Slot management processes require coordination between various agencies delegated by government entities to ensure fair shot allocation between airports and airlines. The processes are extended for secondary trading in countries where this is allowed. These processes are often guided by the International Air Transport Association (IATA) slot allocation guidelines. Often these coordination methods and information resulting from them are not transparent enough for the stakeholder, and thus, these methods are not optimized to utilize resources and reduce congestion. Slots may also be blocked and may remain underutilized due to an inefficient mechanism to broadcast and verify slot availability.

Therefore, there is a need for methods and systems for efficiently allocating airline slots. The present disclosure is directed to addressing one or more of these above-referenced challenges.

The background description provided herein is for the purpose of generally presenting the context of the disclosure. Unless otherwise indicated herein, the materials described in this section are not prior art to the claims in this application and are not admitted to be prior art, or suggestions of the prior art, by inclusion in this section.

### SUMMARY OF THE DISCLOSURE

According to certain aspects of the disclosure, systems and methods are disclosed for using blockchain technology to record information pertaining to the airside slot usage. It should be appreciated that the terms airside slot and airport slot are used interchangeably herein. A method for managing airport slot reservations using a shared database network according to some examples of the present disclosure includes: at a computing device, receiving information of one or more open airport slots; validating, through the shared database network (e.g., using the coordinated rules corresponding to the local jurisdiction), availability of the open airport slots stored in a shared ledger of the shared database network; publishing the open airport slots to one or more air carrier devices (e.g., by a computing device or by a human coordinator) to initiate electronic transactions of the open airport slots; receiving one or more bid transactions for the open airport slots from one or more air carrier devices, wherein each of the one or more bid transactions comprises associated bid information; validating the bid information of the received one or more bid transactions through the shared database network using predefined validation rules; allocating the bid transactions to corresponding open airport slots based on the predefined validation rules and the validated bid information; and publishing the bid transactions allocated to the corresponding open airport slots to the shared ledger.

A computer device for managing airport slot reservations using a shared database network according to some examples of the present disclosure includes: an interface unit; a memory storing instructions; and one or more processors configured to perform operations including: receiving information of one or more open airport slots; validating, through the shared database network, availability of the open airport slots stored in a shared ledger of the shared database network; publishing the open airport slots to one or more air carrier devices to initiate electronic transactions of the open airport slots; receiving one or more bid transactions for the open airport slots from one or more air carrier devices, wherein each of the one or more bid transactions comprises associated bid information; validating the bid information of the received one or more bid transactions through the shared database network using predefined validation rules; allocating the bid transactions to corresponding open airport slots based on the predefined validation rules and the validated bid information; and publishing the bid transactions allocated to the corresponding open airport slots to the shared ledger.

Furthermore, a non-transitory computer-readable medium, according to some examples of the present disclosure, stores instructions that, when executed by one or more processors of a computer system, cause the one or more processors to perform operations. The operations include: receiving information of one or more open airport slots; validating, through the shared database network, availability of the open airport slots stored in a shared ledger of the shared database network; publishing the open airport slots to one or more air carrier devices to initiate electronic transactions of the open airport slots; receiving one or more bid transactions for the open airport slots from one or more air carrier devices, wherein each of the one or more bid transactions comprises associated bid information; validating the bid information of the received one or more bid transactions through the shared database network using predefined validation rules; allocating the bid transactions to corresponding open airport slots based on the predefined validation rules and the validated bid information; and publishing the bid transactions allocated to the corresponding open airport slots to the shared ledger.

Additional objects and advantages of the disclosed embodiments will be set forth in part in the description that follows, and in part will be apparent from the description, or may be learned by practice of the disclosed embodiments. The objects and advantages of the disclosed embodiments will be realized and attained by means of the elements and combinations particularly pointed out in the appended claims.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an example shared database network to manage airport slot reservations, as described by the techniques herein.
FIG. 2 depicts an example network of organizations receiving information about slot reservations on the shared database network, as described by the techniques herein.
FIG. 3 depicts an example system of an updating process of the shared database network, as described by the techniques herein.
FIG. 4 depicts an example flow chart depicting operations for validating and updating primary slot information in the shared database network, as described by the techniques herein.
FIG. 5 depicts an example flow chart depicting operations for validating and updating secondary slot information in the shared database network, as described by the techniques herein.
FIG. 6 depicts an example flow chart of a process for managing the airport slot reservations using a shared database network, as described by the techniques herein.
FIG. 7 shows an example computer device configured to perform airport slot management operations, as described by the techniques herein.

### DETAILED DESCRIPTION OF EMBODIMENTS

In general, systems and methods of the present disclosure utilize shared database technology (e.g., "blockchain" technology) to record information, such as information pertaining to management of airport slots. As will be discussed in more detail below, a network comprising various computer systems may manage a shared database network recording of information. The computer systems of the network may belong to parties such as government organizations, industry organizations, airports, airlines, and other buyers, sellers or parties otherwise interested in tracking and monitoring airport slot availability.

An airport slot allocated to a particular carrier (e.g., airline) is the entitlement for that carrier to use the runway capacity at a particular airport on a specific date at a specific time. At certain times, slots may be limited in supply and thus may need to be judiciously allocated to ensure that carriers deploy their capacity in an efficient manner. Some airports, called "Level 1" airports, have airport infrastructure that is generally adequate to meet the demands of airport users at all times. Some airports, called "Level 2" airports, have a potential for congestion during some periods of the day, week, or season, which can be resolved by voluntary cooperation between airlines. Some airports have constrained capacities due to lack of sufficient infrastructure. These airports have a coordinator or coordinating entity to manage the airport slots. These airports are known as "Level 3" airports. If airport congestion worsens, the government must decide on a change from self-regulation to an explicit government regulation as a Level 3 coordinated airport (e.g., change classification of airport levels). Based on the specific capacity bottlenecks, the annual and hourly declared capacity have to be established in terms of available slots. Each airline needs a slot to operate an air service at the coordinated airport. The coordinator allocates the slots each season to the airlines in an independent, neutral, and non-discriminatory way. The slot coordinator is often approved by the government. Often, slots are allocated to airlines periodically during a given year or other time period. For example, slots may be allocated periodically over a year at different travel or weather seasons (e.g., summer, winter, monsoon season, etc.). Slots may also be allocated based on certain special events. For example, if a city or region is experiencing a major event with significant travel implications, slots may be allocated and assigned to airlines accordingly.

Slots may be allocated to airlines based on certain criteria. These criteria may be established based on local jurisdiction guidelines or other regulatory guidelines (e.g., the International Air Transport Association (IATA) and the Worldwide Slot Guidance (WSG) or other organizations or standards). For example, airlines may be allocated slots based on historical precedence, allowing incumbent airlines to retain a group of slots previously assigned to them. In one example, slots may be allocated by an airport slot coordinator to passenger air carriers according to historical precedence and use criteria (e.g., if previous slots have been utilized at least 80% of the time in a preceding season). In some airport jurisdictions, slots may not be withdrawn from existing carriers to accommodate for new entrants, and often new entrants may have access to a limited number of slots (e.g., 50% of slots) due to grandfathered slot allocation to existing carriers. When air carriers merge, airport authorities may apply a "use it or lose it" rule, allowing for a merged entity to retain access to all infrastructure, including slots, controlled by the respective airline prior to merger.

Thus, airport slots may be high value assets with a strong secondary market demand. The techniques herein describe a framework (e.g., blockchain technology) for effectively managing and trading slot allocation for airlines and airports. The framework treats the slot as a digital asset and provides several enhancements over existing manual processes. For example, the blockchain technology described herein establishes ownership of the slot and asset categories for the slot (e.g., runway allocation, gate allocation, tarmac (or "apron") allocation, baggage allocation, etc.). The blockchain technology also establishes a trusted mechanism for transparent processes, where new slots are published with coordinator parameters and requiring multiple roles of approval for solicitors requesting slot allocations.

Additionally, the blockchain technology described herein enables airport slot management and trading to interested entities. Thus, disparate organizations and systems can self-manage high value assets (such as premium slot allocations) in a transparent and validated way to increase slot utilization while reducing the intermediary cost of managing slot assets.

A blockchain based airport slot management system will help airlines, air navigation service providers (ANSPs), and other regulatory entities to manage the slots in an optimum way by dynamically identifying the slot which an airliner may not be able to adhere to. Apart from identifying an available slot, the blockchain based management system will help the airliner trade or swap slots with other airlines, thus enabling a more efficient secondary market for airport slot trading. For example, airport coordinators, local allocation coordinators, regulators, rule approvers, airlines, local inspection coordinators, and slot marketplaces may digitally coordinate and manage slot allocation, trading, biding, changes, cancellations, secondary trading, etc.

Additionally, the blockchain technology may assist in effectively allocating airport slots based on air traffic conditions and airplane scheduling. For example, the blockchain technology may predict expected times of arrivals and/or departures and, as a consequence, may find out opportunities to trade slots based on these parameters.

In the following description, embodiments will be described with reference to the accompanying drawings. The terminology used in this disclosure may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. Both the foregoing general description and the following detailed description are exemplary and explanatory only and are not restrictive of the features, as claimed.

In this disclosure, the term "based on" means "based at least in part on." The singular forms "a" and "an" include plural referents unless the context dictates otherwise. The term "exemplary" is used in the sense of "example" rather than "ideal." The terms "information," "data," and "content" may be interchangeable when permitted by context. The terms "record" and "store," in the sense of recording or storing data, may be interchangeable when permitted by context. The terms "comprises," "comprising," "includes," "including," and other variations thereof, are intended to cover a non-exclusive inclusion such that a process, method, or product that comprises a list of elements does not necessarily include only those elements, but may include other elements not expressly listed or inherent to such a process, method, article, or apparatus.

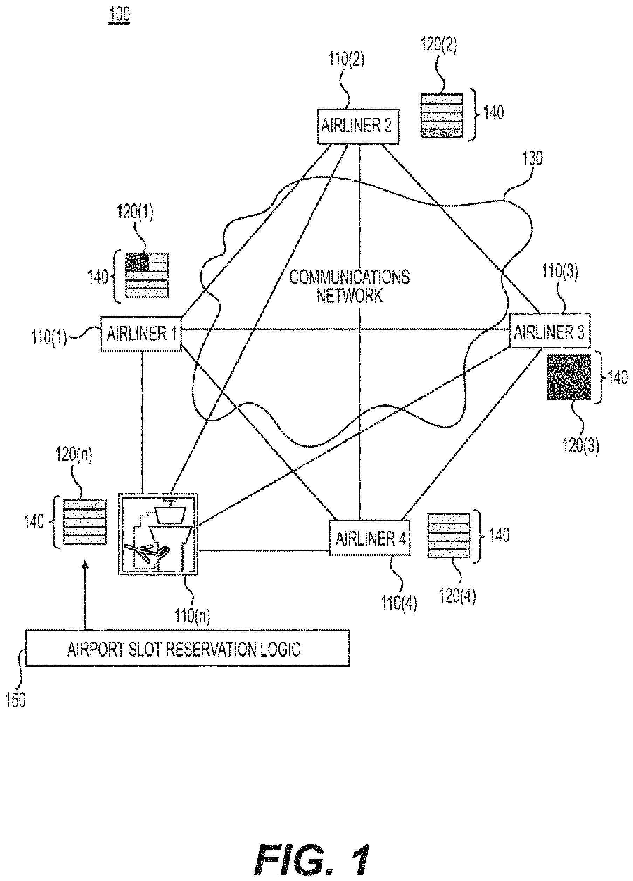

FIG. 1 illustrates an example of a network 100 according to the present disclosure. Network 100 also serves as an example of an environment for implementing various methods and systems according to the present disclosure. The network 100 may include a plurality of nodes 110(1)-110(n). The nodes 110(1)-110(n) may be connected to each other through a communications network 130.

In general, any of the nodes 110(1)-110(n) may be a computer system. In this disclosure, the term "computer system" generally encompasses any device or combination of devices, each device having at least one processor that executes instructions from a memory. Additionally, a computer system may be part of another computer system.

The total number of nodes, which is represented in the figure as "n," is not limited to any specific number. FIG. 1 shows five network nodes as an example. The communications network 130 by which the nodes 110(1)-110(n) communicate with each other may be a public communications network (such as the internet), a private communications network, or a communications network comprising a combination of public and private network elements. The communication path between nodes 110(1)-110(n) may include any link, such through satellite communications (e.g., SATCOM), cellular networks, Wi-Fi (e.g., IEEE 802.11 compliant), WiMAx (e.g., AeroMACS), optical fiber, and/or air-to-ground (ATG) network, and/or any other communication links now known or later developed. Each of the nodes 110(1)-110(n) may have a hardware communications interface to communicate with other nodes.

Any one or more of the nodes 110(1)-110(n) may include a data store, such as data stores 120(1)-120(n) shown in FIG. 1. The data store of any of the nodes 110(1)-110(n) may, for example, be a database or a file system implemented by a memory of a computer system.

Network 100 may be a network that manages a database shared among the nodes 110(1)-110(n) of the network 100. In the example shown in FIG. 1, the shared database is exemplified as blockchain 140, which may include a growing list of records, called blocks, which are linked and secured using cryptography techniques. Each block may include a cryptographic hash of the previous block, a timestamp, and data that is recorded by the block, such as data including information pertaining to licenses for aviation software products and the usage of such licenses.

Network 100 may also be referred to as a blockchain network that comprises nodes 110(1)-110(n). In one example, the blockchain network may be referred to herein as a shared database, a shared database network, shared ledger, a shared ledger network, a distributed ledger, and/or a distributed ledger network. Blockchain 140 may serve as an open, distributed ledger in which any of the nodes 110(1)-110(n) in the network 100 may record information, such as information on transactions and availability of airport slots, in a verifiable and permanent manner. A blockchain is an example of a distributed ledger.

The network 100 may be a peer-to-peer network of nodes 110(1)-110(n) that collectively adheres to one or more protocols for various operations involving inter-node communication and management of blockchain 140, such as the addition and validation of new blocks. The blockchain may be managed such that the data recorded in any given block cannot be altered retroactively without the alteration of all subsequent blocks, in the absence of collusion of a majority of the member nodes 110(1)-110(n) to alter the data. Accordingly, the blockchain 140 may be so-called "immutable" as it provides data recorded therein with resistance to subsequent modification.

According to some embodiments, blockchain 140 may be a permissioned blockchain, such as a private blockchain or a consortium blockchain. In such embodiments, membership to being a node in the network 100 may be restricted to pre-approved computer systems and/or computer systems belonging to pre-approved parties. In other implementations, it is also possible for the blockchain 140 to be a public blockchain, such as a blockchain without any access restrictions.

The nodes 110(1)-110(n) in the network 100 may have different functions, permissions, or privileges in performing operations pertaining to usage of the blockchain 140. Such operations include the submission a new block to the network 100 for validation, the validation of a new block, and storage of a copy of the blockchain 140. For example, it is possible for some of the nodes 110(1)-110(n) to have only permission to read data from the blockchain 140, while not having permission to submit new blocks for validation or take part in the validation of new blocks. In general, whenever the nodes 110(1)-110(n) are collectively described in this disclosure as performing a particular action or process involving the blockchain 140, it is understood that the action or process may be performed by all or only a portion of the nodes 110(1)-110(n).

Copies of the blockchain 140 may be stored in data stores of one or more of the nodes 110(1)-110(n) of the network 100. For example, the data stores 120(1)-120(n) of the nodes 110(1)-110(n) may each store a respective local copy of the blockchain 140. A local copy of the blockchain 140 may be a full copy or a partial copy of the blockchain 140. In general, whenever information is described in this disclosure as being added to the blockchain 140, the addition of the information to blockchain 140 may be understood as the addition of the information to the copies of the blockchain 140 stored by all or a sufficient number of the nodes 110(1)-110(n) that are relied upon for storage of a copy of the blockchain 140.

While FIG. 1 illustrates nodes that store local copies of the blockchain 140, network 100 may include nodes that do not store any copies of the blockchain 140, but nonetheless take part in other operations involving the blockchain 140, such as the generation of new blocks for the blockchain 140 and the validation new blocks generated by other computer systems of the network 110. Nodes that do not store local copies of the blockchain 140 may have access to the local copies stored on one or more of the computer systems that do store local copies of the block chain. Such nodes are not shown in FIG. 1.

The nodes 110(1)-110(n) of network 100 may be operated by various parties. In examples that apply methods and systems of the present disclosure to the aviation industry, parties that may operate nodes 110(1)-110(n) in network 100 include organizations that are involved or have an interest in monitoring and updating airport slot availability. For example, in FIG. 1, nodes 110(1)-110(4) may be computer systems managed or accessible by one or more airlines. Node 110(n) may be a computer system managed or accessible by an airport. Thus, in FIG. 1, nodes 110(1)-110(n) may comprise a combination of airlines and airports, each entity with an interest in accessing the availability of airline slots as recorded in the distributed ledger (blockchain 140). It should be appreciated that the nodes 110(1)-110(n) may represent other entities, and the depictions in FIG. 1 are merely an example. The nodes 110(1)-110(n) may be any entity with an interest in accessing the availability of airline slots as recorded in the blockchain 140. In one example, each of the nodes 110(1)-110(n) must have special network permissions to access the blockchain 140. In another example, the blockchain 140 may be publicly available to the nodes 110(1)-110(n).

In one example, the computer system operated by one or more of the airlines may be operated to access slot availability and to provide a bid for one or more slots for electronic purchase. Data representing information related to the purchase of an airport slot, such as information on the purchaser, the seller, or other information about the airport slot, may also be stored in the blockchain 140. In one example, node 110(n) may access the blockchain 140 to determine airport slot information, and may update the airport slot information, by executing airport slot management logic 150, shown in FIG. 1. Examples of using of the blockchain 140 for management of such information are discussed below in more detail.

As noted above, the nodes 110(1)-110(n) of network 100 may include a computer system of an aircraft. An aircraft may be an airplane, a helicopter, an unmanned aerial vehicle (UAV), or other type of aircraft. A computer system of an aircraft may, for example, include a flight management system (FMS) or other system used in the control or operation of the aircraft. Such computer systems may be part of the avionics onboard the aircraft, and may be coupled to a display inside the aircraft, such as a cockpit display. However, the nodes 110(1)-110(n) of network 100 may, in general, include off-board computer systems that are off-board any aircraft, and/or computer systems comprising a combination of on-board and off-board components. Additionally, the communications network 130 may include elements permitting communication between computer systems on-board aircraft and computer systems on the ground.

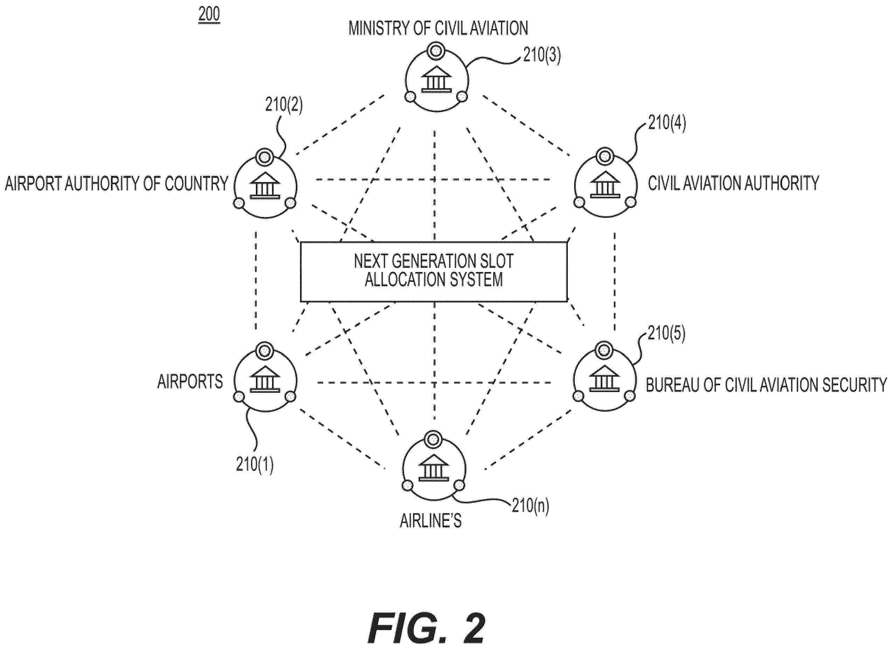

FIG. 2 shows an example network 200 of organizations receiving information about slot reservations on a shared database network. FIG. 2 shows a plurality of nodes 210(1)-210(n). The nodes in FIG. 2 are intended to represent organizations that have an interest in accessing airport slot information. The nodes 210(1)-210(n) communicate with each other over a database network 230 and with a shared next generation (NG) slot allocation database 240.

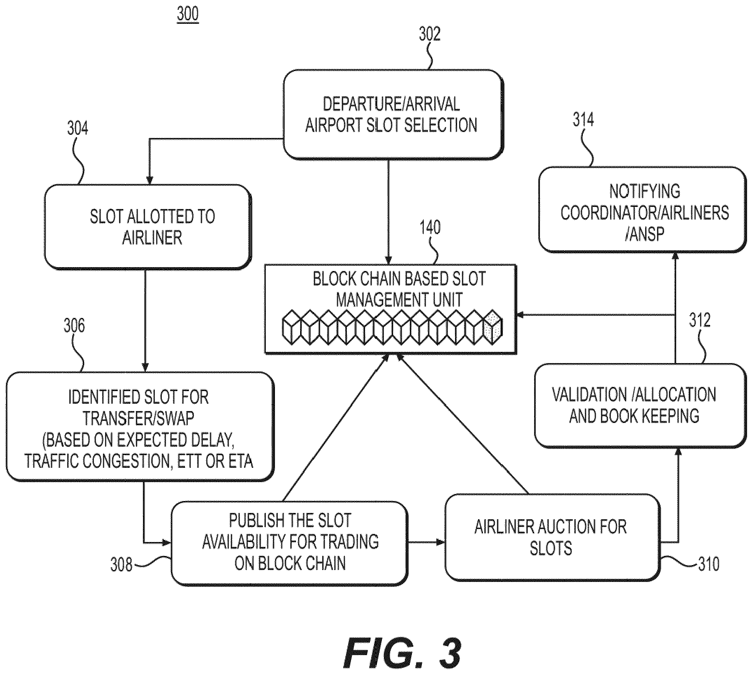

Reference is now made to FIG. 3, which depicts an example system 300 with a process for updating the shared database network of available airport slots. In FIG. 3, the blockchain 140 represents the distributed ledger of airport slot characteristics that are available to one or more nodes (e.g., nodes 110(1)-110(n) described in connection with FIG. 1, nodes 210(1)-210(n) described in connection with FIG. 2, or other nodes not described but heretofore contemplated). The process in FIG. 3 shows how the blockchain 140 may be updated by one or more nodes in the shared database network. It should be appreciated that the process in FIG. 3 may be performed by one or more processors on a computing device by executing stored instructions (e.g., instructions stored on a non-transitory computer-readable medium) for the process. The computing device may be located at any node in the shared database network or other computing device in communication with the shared database network.

At operation 302 in FIG. 3, departure and/or arrival airport slots are selected. In one example, an airport may broadcast to airlines or other interested parties the availability of slots, and one or more airlines may select a slot, e.g., by bidding or purchasing the slot from the airport. At operation 304, an airport slot is allotted to an airline. The slot allocation may occur based on certain criteria such as bid price, demand, flight volume, prior history, or other criteria that an airport may use to allocate a slot to an airline. At operation 306, a slot is identified for a potential transfer or swap. In one example, an airline that previously owns a slot may be experiencing a travel delay, traffic congestion, a delay in an estimated takeoff time (ETT), a delay in an estimated arrival time (ETA), etc. Because of this delay or other circumstance, the airport slot held by the airline may be identified as one qualifying for a transfer or swap. In some examples, the airline originally holding the airport slot may identify the transfer or swap opportunity, or the transfer/swap opportunity may be identified by another entity in the shared database network (e.g., the airport assigning the airport slot), or in another example, the transfer/swap opportunity may be identified automatically by one more computing devices configured to optimize air traffic.

At operation 308, the slot availability is published for trading on the blockchain 140. In one example, the computing device at a node that identified a transfer/swap opportunity may publish the slot availability on the blockchain 140 and may distribute the update to the blockchain 140 to the nodes in the shared database network having access to the blockchain 140. After the slot availability is published to the blockchain 140, at operation 310, an auction may be held for the available airport slot. A second airline may purchase the available airport slot during the auction, or may swap the available airport slot for another airport slot owned by the second airline, and when the purchase is completed, the blockchain 140 is updated with the purchase/swap information. For example, the blockchain 140 is updated to include an indication of the second airline as a new owner of the airport slot, and any swap information. The blockchain 140 may publish details about the auction itself, including an identifier to indicate that the airport slot was traded on an auction, the airlines that bid for the slot, and the airline that ultimately won the auction and purchased or swapped the airport slot. At operation 312, the auction for the available airport slot is validated, and the blockchain 140 is updated to include a most recent allocation of airport slots to include the results of the slot auction. At operation 314, airport coordinators, airlines, ANSPs and other entities in the shared database network are notified of the updates to the blockchain 140. It may be contemplated that for every airport, every airline or chartered flights and air traffic control (ATC) will be part of the blockchain 140 and will participate in the shared database network. In one example, the blockchain 140 will include the names of the airlines involved in an airport slot transfer, the slot times transferred, and the period of the transfer (e.g., period of operation, seasons, permanent/temporary categorization, etc.).

By distributing the blockchain 140 to airline coordinators, the management of slot trading is automated. For example, in conventional slot trading environments, an aircraft operator (e.g., an airline) may employ multiple slot coordinators who review airline schedules and slot schedules to identify alternate slots that might improve the flight schedule of the airline. A slot coordinator may be provided with a view of an airline schedule and a separate view of slot assignments. When a potential slot exchange is identified, the slot coordinator may, under certain circumstances (e.g., when the other airline is not placed in a better condition by the exchange) contact his/her counterpart slot coordinator at another airline to request a slot exchange for a flight. If an agreement is reached, the slot exchange is executed. The blockchain technology described herein automates the back-and-forth between slot coordinators and avoids cumbersome book keeping by the slot coordinators. Additionally, the blockchain technology for slot allocations and trading is highly transparent and visible to all parties in the shared database network, and the ledger recording slot status is secure.

The blockchain technology described herein also provides advantages when compared to the traditional freight carrier market. Slot management for freight carriers often leads to conflict at many airports between home carriers, low cost carriers, and cargo carriers for maintaining slot positions. For example, cargo carriers may lose ground due to 80-20 regulations for maintaining historic rights to airport slots (e.g., an 80% utilization rate as described above). Often, cargo flights have increased complexity, particularly with respect to ETTs. The blockchain technology described herein will address the cargo availability loading time, inspections, etc. through a connected aircraft solution and will identify opportunities for cargo flights to trade slots. These techniques herein reduce losses freight carriers may face due to inefficient slot usage and allocation.

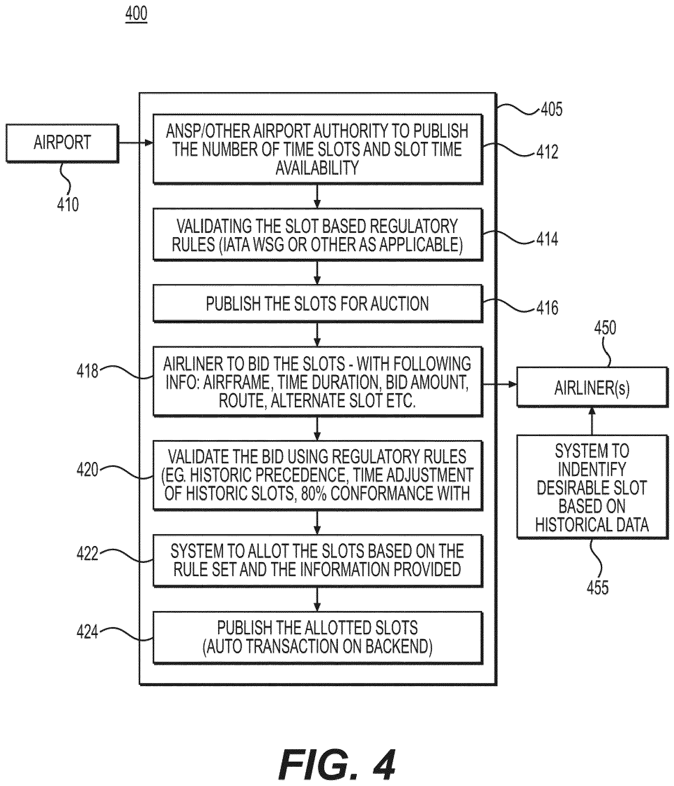

Reference is now made to FIG. 4 which shows an example flow chart 400 depicting operations for validating and updating primary slot information in a shared database network. In one example, FIG. 4 represents a primary bidding scenario, where airline slots are bid on by airlines or other interested parties based on slot availability provided by an airport. FIG. 4 shows a module 405 that is configured to operate operations to access and update the blockchain 140. The module 405 may represent instructions stored on a non-transitory computer-readable medium (e.g., software or firmware) that is executed by one or more processors of a computing device to perform the operations for validating and updating the slot information, as described herein.

FIG. 4 shows a representation of an airport node 410 that represents an airline in the shared database network and that participates in the primary bidding scenario. The airport node 410 is configured to send information to the module 405. At operation 412, the module 405 receives from the airport (or additionally/alternatively an ANSP or other airport authority) a number and availability of airport slots. At 414, the module 405 validates the slot availability based on regulatory rules (e.g., rules established by the IATA and the WSG, or other rules or standards as applicable). At 416, the module 405 publishes to the blockchain 140 the slots available for auction. Entities that have access to the blockchain 140 via shared database network can receive this information via the blockchain 140. At 418, an airline node 450 (e.g., representing an airline entity) communicates with the module 405 to receive and send bid information. For example, at operation 418, the airline node 450 receives from the module 405 information relating to bid criteria (such as airframe, slot time duration, bid amount, route, alternate slot options, etc.), and in response sends a bid or otherwise suitable transfer/swap offer for one or more of the available slots. In another example, as represented by block 455, the airline node 450 automatically identifies whether an available slot is desirable for it based on historical data analysis of the slot usage relative to other parameters relevant to the airline.

At 420, the module 405 validates an airline bid using regulatory rules (e.g., historical precedence, time adjustment of historic slots, 80% utilization rate, etc.), and at 422, the module 405 allots the slots based on the rule set and the bid information provided by the airlines. At 424, the module 405 publishes the allotted slots to the blockchain 140.

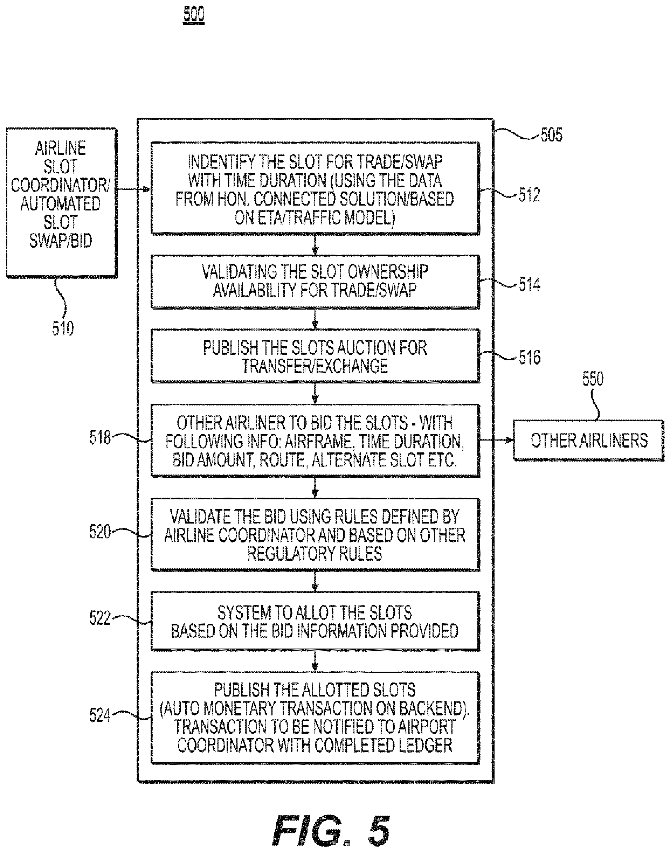

Reference is now made to FIG. 5, which shows example flow chart 500 for validating and updating secondary slot information in the shared database network. In one example, FIG. 5 represents a secondary bidding scenario, where airport slots already allocated are identified as available and are bid on by other airlines. FIG. 5 shows a module 505 that is configured to operate operations to access and update the blockchain 140. The module 505 may represent instructions stored on a non-transitory computer-readable medium (e.g., software or firmware) that is executed by one or more processors of a computing device to perform the operations for validating and updating the slot information, as described herein.

FIG. 5 shows a representation of an airline node 510. The airline node 510 may be managed by an airline slot coordinator or an automated slot swap/bid process. The airline node 510 has access to the shared database network to participate in the secondary bidding scenario. The airline node 510 is configured to send information to the module 505. At operation 512, the module 505 receives from the airline slots that the airline has available for trade or swap. The available slots may have associated time duration information, and the availability of these slots may be determined based on data models, such as historical use models, ETA/traffic models, etc.). At 514, the module 505 validates that the airline owns the slot (e.g., by checking the blockchain 140) and that the slot is available for a trade or swap. At 516, the module 505 publishes to the blockchain 140 that a slot is available at an auction for a transfer or exchange. At operation 518, a second airline node 550 (e.g., representing one or more other airline entities) communicates with the module 505 to receive and send bid information. For example, at operation 518, the airline node 550 receives from the module 505 information relating to available airport slots, and the airline node 550 sends a bid to the module 505 for the available airport slot. In one example, more than one airline may submit a bid for an available airport slot, and airlines may submit more than one bid. The bid information may include airframe information, time duration information, a bid amount, route information, alternate slot availability, etc. At 520, a bid is validated using rules defined by an airline coordinator and other regulatory rules (e.g., the IATA, WSG, or other rules as applicable), and at 522, the slots are allotted based on the bid information provided. At 524, the allotted slots are published to the blockchain 140, and an updated ledger (e.g., blockchain 140) is distributed to other nodes in the shared database network.

An illustrative example of the digital lifecycle of an airport slot is now provided. Table 1 below shows a range of airport slot events that may be documented and updated on the blockchain 140.

**Table 1: Digital lifecycle of airport slots**

| **Slot Lifecycle and Transaction Type** | **Transaction Illustration** | **Transaction Initiated By** | **Endorsement - Semi Automated : Manual Action by Role based Access via Digital Identities / Automated: Blockchain Slot Contracts** | **Illustration : Smart Contract for Digital Validation / Verification** |
|---|---|---|---|---|
| Publish: Level 3 Slot Availability | Coordinatio n Parameters - Seasons , Aircraft Types , Time period , Time of the Day | Airport Coordinator | Airport Coordinator Regulator, Govt. Rule Maker, Airline Members (Optional), GoDirect™ Trade Distributed Slot Manager | Check Availability: Required Past Safety and Maintenance Records of the airport |
| | | | | Other Information |
| Publish : Level 1/ Level | Coordination | Airport Coordinator | Airport Coordinator Regulator, Govt. Rule | Check Availability: Required Past Safety |
| 2 Slot Availability | Parameters - Seasons, Aircraft Types , Time period , Time of the Day | | Maker, Airline Members (Optional), GoDirect™ Trade Distributed Slot Manager | and Maintenance Records of the airport |
| | | | | Other Information |
| Level Change : Airport | Request to change from Level 2 to Level 3 | Airport Coordinator | Airport Coordinator Regulator, Govt. Rule Maker, Airline Members (Optional), GoDirect™ Trade Distributed Slot Manager | Check Availability: Past Airport Utilization record |
| | | | | Demand and Capacity Analysis |
| Allocation : Request | Coordinatio n Parameters - Aircraft type/s, Grandfather ed rights, Past Usage Merged History Etc. | Airline Slot Coordinator | Airport Coordinator Regulator, Govt. Rule Maker , GoDirect™ Trade Distributed Slot Manager, | Check Availability Aircraft Type Compared against Slot Constraints |
| | | | | Aircraft Grand Fathering rights |
| | | | | Airlines' historically assigned slot usage in airport |
| Query : Allocation | Airlines and other participating organization s can query | Airline Slot coordinator, | Airport Coordinator Regulator, , Airlines , GoDirect™ Trade Distributed Slot Manager | Check : |
| | | | | Role based Access controlled |
| | the information transacted in the ledger to seek about previous slot transactions. | | | |
| Cancel : Slot | Airport Slot Coordinator can detect Low usage of the slot and may cancel the Slot for an airline | Airport Slot Coordinator | Airport Coordinator Regulator, , Airlines , GoDirect™ Trade Distributed Slot Manager | Check : |
| | | | | Airline slow usage of the slot. |
| Transfer : Slot | Airline 1 to Airline 2 | Airline 1 : Seller / Transferors Slot Coordinator Airline 2: Buyer/ Transferee Slot Coordinator | Airport Coordinator Regulator, , Airlines , GoDirect™ Trade Distributed Slot Manager | Check : |
| | | | | Airline 1 has current Ownership of the requested Slot |
| | | | | Receiving Airline meets requested criteria |

In Table 1, the first two entries show "publish" event for an airport slot. These slots may be available to airlines on a primary slot market by an airport (e.g., a level 1, level 2, or level 3 slot availability). Table 1 shows an entry with a change event, wherein airport slot has changed levels. Table 1 also shows other types of entries, for example, an airport slot allocation or reallocation request (that may be initiated, for example, by an airline), a query request requesting information of an existing airport slot allocation, an airport slot cancellation request, and an airport slot transfer request. It should be appreciated that these are merely examples. The blockchain 140, thus, allows for a distributed ledger of airport slot allocation information. Airport slot allocation information may be provided to interested organizations in channels where information of airport slot transactions are privy to performing members of certain interested organizations based on organizational rules. The blockchain 140 may be an inter-airport distributed ledger or may be a distributed ledger for intra-airport use (or both). Sensitive data, such as a bid price for an airport slot may be managed by privacy controls in the distributed ledger. The distributed ledger enables an immutable recordation of all transactions related to an airline slot, and marketplaces (such as GoDirect™ Trade may utilize the distribute ledger for facilitating airport slot transactions.

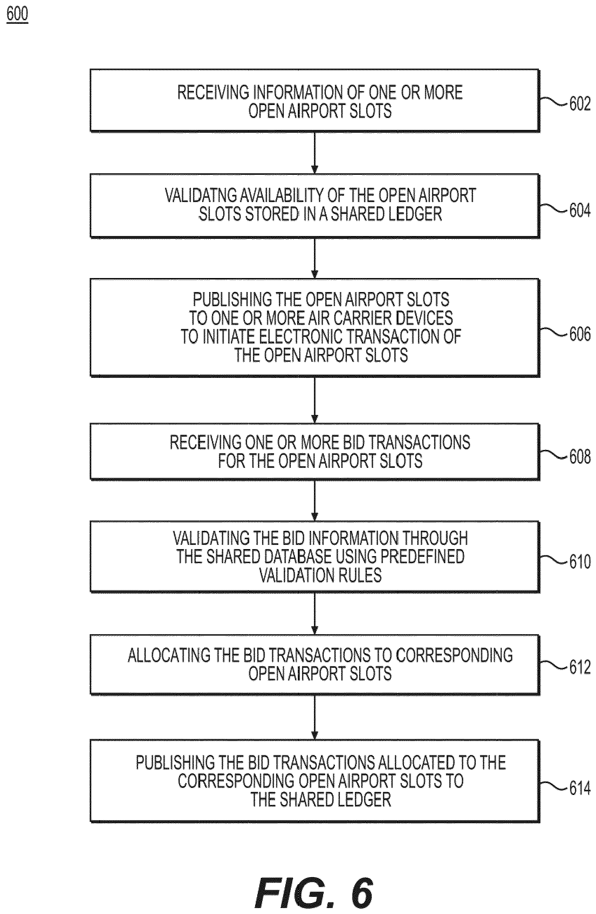

Reference is now made to FIG. 6 which shows an example flow chart 600 for a process for managing the airport slot reservations using a shared database network, as described by the techniques herein. At operation 602 in FIG. 6, a computing device (e.g., a computing device at one of the nodes in a shared database network) receives information of one or more open airport slots. At 604, the computing device validates, through the shared database network, availability of the open airport slots stored in a shared ledger of the shared database network. The computing device publishes, at operation 606, open airport slots to one or more air carrier to initiate electronic transactions of the open airport slots. At operation 608, the computing device receives one or more bid transactions from the air carrier devices for the open airport slots, and at 610, the computing device validates the bid information through the shared database network using predefined validation rules. At operation 612, the computing device allocates the bid transactions to corresponding open airport slots based on the predefined validation rules and the validated bid information and, at 614, publishes the bid transactions that are allocated to the corresponding open airport slots to the shared ledger.

It should be appreciated that certain implementations may utilize a determination of consensus as a condition for updating a shared ledger (e.g., adding blocks to blockchain 140). Consensus may be reached by any suitable type of consensus protocol. For example, the shared database network may be deemed to have reached a consensus (and updates to the shared ledger deemed to be approved for addition to the blockchain 140) if a certain threshold (e.g., a configurable threshold more than 50% or at least 51% as per business policies) of the nodes participating in the validation process have validated the update and/or the one or more transactions represented by the update.

The determination of consensus may utilize any suitable process algorithm, such as a practical Byzantine fault tolerance (PBFT) algorithm. For example, each node that has performed validation may broadcast a consensus message indicating the result of its validation determination to one or more computer systems in the shared database network. Then, consensus may be reached when the one or more computer systems receiving the consensus messages has determined that the number of nodes expressing approval has reached a certain threshold.

As the blockchain 140 is updated, information for linking the new information to the existing blockchain 140 may be a hash of the existing block (e.g., hash of the content of the previous entry on the shared database) or some data derived from the previous block. In some embodiments, the information to link to the existing block of the blockchain may, for example, be part of the header of the previous block. The updated block may also include a timestamp indicating the time at which block was created.

Thus storage of information in blockchain 140 in the manner discussed herein, for example, generates immutable records that can provide regulatory compliance for nodes in the shared database network. The blockchain 140 permits an efficient method of tracking allocation of airport slots, both on a primary distribution scenario and secondary distribution scenarios.

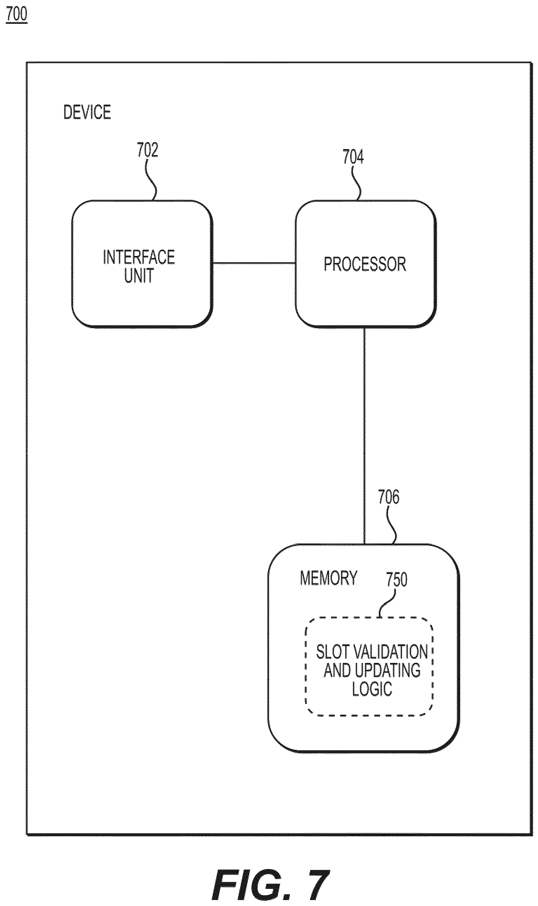

FIG. 7 is a simplified functional block diagram of a computing device 700 that may be configured as any node in a shared database network (e.g., a blockchain network) to execute the techniques described herein, according to exemplary embodiments of the present disclosure. In one example, the device 700 in FIG. 7 shows an interface unit 702, a processor 704, and a memory unit 706. The interface unit 702 is configured to send and receive data to one or more nodes of the shared database network, as described herein. The device 700 may include an internal communication bus and a memory 706 configured for program storage and data storage for various data files to be processed and/or communicated, although the device 700 may receive programming and data via network communications. The memory 706 includes slot validation and updating logic 750 that includes instructions that when executed by the processor 704 cause the processor to perform operations to validate, update, and distribute a shared ledger (e.g., blockchain 140) with airport slot management and allocation information, as described by the techniques herein. The device 700 also may include input and output ports to connect with input and output devices such as keyboards, mice, touchscreens, monitors, displays, etc. Of course, the various system functions may be implemented in a distributed fashion on a number of similar platforms, to distribute the processing load. Alternatively, the systems may be implemented by appropriate programming of one computer hardware platform.

Any suitable system infrastructure may be put into place to allow for the assessment of models monitoring devices. In one embodiment, any of the disclosed systems, methods, and/or graphical user interfaces may be executed by or implemented by a computing system consistent with or similar to the descriptions herein. Although not required, aspects of the present disclosure are described in the context of computer-executable instructions, such as routines executed by a data processing device, e.g., a server computer, wireless device, and/or personal computer. Those skilled in the relevant art will appreciate that aspects of the present disclosure can be practiced with other communications, data processing, or computer system configurations, including: Internet appliances, hand-held devices (including personal digital assistants ("PDAs")), wearable computers, all manner of cellular or mobile phones (including Voice over IP ("VoIP") phones), dumb terminals, media players, gaming devices, virtual reality devices, multi-processor systems, microprocessor-based or programmable consumer electronics, set-top boxes, network PCs, mini-computers, mainframe computers, and the like. Indeed, the terms "computer," "server," and the like, are generally used interchangeably herein, and refer to any of the above devices and systems, as well as any data processor.

Aspects of the present disclosure may be embodied in a special purpose computer and/or data processor that is specifically programmed, configured, and/or constructed to perform one or more of the computer-executable instructions explained in detail herein. While aspects of the present disclosure, such as certain functions, are described as being performed exclusively on a single device, the present disclosure may also be practiced in distributed environments where functions or modules are shared among disparate processing devices, which are linked through a communications network, such as a Local Area Network ("LAN"), Wide Area Network ("WAN"), and/or the Internet. Similarly, techniques presented herein as involving multiple devices may be implemented in a single device. In a distributed computing environment, program modules may be located in both local and/or remote memory storage devices.

Aspects of the present disclosure may be stored and/or distributed on non-transitory computer-readable media, including magnetically or optically readable computer discs, hard-wired or preprogrammed chips (e.g., EEPROM semiconductor chips), nanotechnology memory, biological memory, or other data storage media. Alternatively, computer implemented instructions, data structures, screen displays, and other data under aspects of the present disclosure may be distributed over the Internet and/or over other networks (including wireless networks), on a propagated signal on a propagation medium (e.g., an electromagnetic wave(s), a sound wave, etc.) over a period of time, and/or they may be provided on any analog or digital network (packet switched, circuit switched, or other scheme).

Program aspects of the technology may be thought of as "products" or "articles of manufacture" typically in the form of executable code and/or associated data that is carried on or embodied in a type of machine-readable medium. "Storage" type media include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the Internet or various other telecommunication networks. Such communications, for example, may enable loading of the software from one computer or processor into another, for example, from a management server or host computer of the mobile communication network into the computer platform of a server and/or from a server to the mobile device. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links, or the like, also may be considered as media bearing the software. As used herein, unless restricted to non-transitory, tangible "storage" media, terms such as computer or machine "readable medium" refer to any medium that participates in providing instructions to a processor for execution.

While the presently disclosed methods, devices, and systems are described with exemplary reference to transmitting data, it should be appreciated that the presently disclosed embodiments may be applicable to any environment, such as a desktop or laptop computer, an automobile entertainment system, a home entertainment system, etc. Also, the presently disclosed embodiments may be applicable to any type of Internet protocol.

Other embodiments of the disclosure will be apparent to those skilled in the art from consideration of the specification and practice of the invention disclosed herein. It is intended that the specification and examples be considered as exemplary only, with a true scope and spirit of the invention being indicated by the following claims.

## Claims

1. A method for managing airport slot reservations using a shared database network, the method comprising:
at a computing device, receiving information of one or more open airport slots;
validating, through the shared database network, availability of the open airport slots stored in a shared ledger of the shared database network;
publishing the open airport slots to one or more air carrier devices to initiate electronic transactions of the open airport slots;
receiving one or more bid transactions for the open airport slots from one or more air carrier devices, wherein each of the one or more bid transactions comprises associated bid information;
validating the bid information of the received one or more bid transactions through the shared database network using predefined validation rules;
allocating the bid transactions to corresponding open airport slots based on the predefined validation rules and the validated bid information; and
publishing the bid transactions allocated to the corresponding open airport slots to the shared ledger.

2. The method of claim 1, wherein receiving the information of the open airport slots comprises receiving the information of the open airport slots from an airport server.

3. The method of claim 1, wherein receiving comprises receiving the information of the open airport slots from an airline slot coordinator device or an automated slot bid service, or both.

4. The method of claim 1, wherein receiving comprises receiving the one or more bid transactions with the associated bid information including information about airframe, slot time duration, bid amount, route information or alternate slot preferences.

5. The method of claim 1, further comprising notifying, through the shared database network, an airport coordinator of the publishing.

6. The method of claim 1, wherein validating comprises validating, through the shared database network, the availability of the open airport slots for correct ownership.

7. The method of claim 1, wherein receiving the bid information from the air carriers comprises identifying a desirable open airport slot based on historical data.

8. The method of claim 1, wherein publishing comprises publishing the bid information allocated to the corresponding open airport slots to the shared ledger that is accessible by one of a plurality of organizations within a jurisdiction responsible for creating and assigning the open airport slots.

9. A computer device for managing airport slot reservations using a shared database network, the computer device comprising:
an interface unit;
a memory storing instructions; and
one or more processors configured to perform operations including:
receiving information of one or more open airport slots;
validating, through the shared database network, availability of the open airport slots stored in a shared ledger of the shared database network;
publishing the open airport slots to one or more air carrier devices to initiate electronic transactions of the open airport slots;
receiving one or more bid transactions for the open airport slots from one or more air carrier devices, wherein each of the one or more bid transactions comprises associated bid information;
validating the bid information of the received one or more bid transactions through the shared database network using predefined validation rules;
allocating the bid transactions to corresponding open airport slots based on the predefined validation rules and the validated bid information; and
publishing the bid transactions allocated to the corresponding open airport slots to the shared ledger.

10. The computer device of claim 9, wherein receiving comprises receiving the information of the open airport slots from an airline slot coordinator or an automated slot bid service, or both.

11. The computer device of claim 9, wherein receiving comprises receiving the one or more bid transactions with the associated bid information including information about airframe, slot time duration, bid amount, route information or alternate slot preferences.

12. The computer device of claim 9, further comprising notifying, through the shared database network, an airport coordinator of the publishing.

13. The computer device of claim 9, wherein validating comprises validating through the shared database network, the availability of the open airport slots for correct ownership.

14. The computer device of claim 9, wherein receiving the bid information from the air carriers comprises identifying a desirable open airport slot based on historical data.

15. The computer device of claim 9, wherein publishing comprises publishing the bid information allocated to the corresponding open airport slots to the shared ledger that is accessible by one of a plurality of organizations within a jurisdiction responsible for creating and assigning the open airport slots.
